# EUROPÄISCHE PATENTSCHRIFT

(11) **EP 1 125 677 B1**
(45) Veröffentlichungstag und Bekanntmachung des Hinweises auf die Patenterteilung: **18.08.2004**
(21) Anmeldenummer: 01102126.8
(22) Anmeldetag: 31.01.2001
(51) Int. Cl.: B23Q 1/54

(54) **Universal-Werkzeugmaschine**
Universal machine tool
Machine-outil universelle

(30) Priorität: 16.02.2000 DE 10006897
(43) Veröffentlichungstag der Anmeldung: 22.08.2001
(73) Patentinhaber: DECKEL MAHO Pfronten GmbH, 87459 Pfronten (DE)
(72) Erfinder: Hoppe, Gerd, 34317 Habichtswald (DE)
(74) Vertreter: Beetz & Partner Patentanwälte

(56) Entgegenhaltungen:
- CH-A- 430 379
- DE-A- 2 906 318
- DE-B- 1 173 766
- DE-C- 3 730 984
- US-A- 4 644 635

## Beschreibung

Die Erfindung betrifft eine Universal-Werkzeugmaschine der im Oberbegriff des Patentanspruchs 1 angegebenen Gattung.

Aus der CH 430 379 A ist eine derartige Universal-Werkzeugmaschine bekannt, die ein formsteifes Maschinenbett mit horizontalen Führungsschienen, auf denen ein formsteifer Maschinenständer verfahrbar ist. An der vorderen Stirnseite des Maschinenständers sind vertikale Führungsschienen vorgesehen, an denen ein Vertikalschlitten mit horizontaler Arbeitsspindel verfahrbar ist. Auf einem niedrigeren Vorderteil des Maschinenbetts sind zwei horizontale Führungsschienen in unterschiedlichen Höhen montiert, auf denen ein Werkstückträger quer zur Fahrtrichtung des Maschinenständers verfahrbar ist. Auf diesem schlittenartigen Werkstückträger ist ein um eine vertikale Achse verdrehbares Zylinderelement angeordnet, das oberseitig auf einer unter einem Winkel von 45° zur Horizontalen geneigten Gleitbahn eine ebenfalls verdrehbare Konsole trägt. An einer zur Gleitbahn um ebenfalls 45° geneigten Stirnfläche der Konsole ist ein Werkstückdrehtisch montiert.

Eine weitere Universal-Werkzeugmaschine ist z.B. aus der EP-0 664 176 A1 bekannt. Die dort offenbarte Universal-Fräs- und Bohrmaschine hat ein Maschinenbett, auf dessen vorderen Teil ein Werkstückschlitten mit einem horizontalen Werkstücktisch in Längsrichtung des Maschinenbetts horizontal verfahrbar ist. Auf dem hinteren Teil des Maschinenbetts ist ein Fahrständer abgestützt und quer zur Verfahrrichtung des Werkstückschlittens motorisch verfahrbar geführt. An der Vorderseite des Fahrständers ist ein vertikal verfahrbares Traggehäuse mit einem zwischen einer Horizontalund Vertikalstellung verschwenkbaren Fräskopf angeordnet. Mit einer derart aufgebauten Werkzeugmaschine können auch komplexe Bearbeitungsoperationen an mehreren Seiten eines Werkstücks durchgeführt werden. Es ergibt sich allerdings das Problem einer unter Umständen aufwendigen Späneentsorgung, da z. B. die auf dem horizontalen Werkstücktisch liegenbleibenden Späne von Hand entfernt werden müssen.

Aufgabe der Erfindung ist es, eine Universal-Werkzeug-maschine der eingangs genannten Art zu schaffen, die eine genaue Mehrachsenbearbeitung auch größerer und sperriger Werkstücke in einer einzigen Aufspannung und eine vereinfachte Späneentsorgung ermöglicht.

Diese Aufgabe wird erfindungsgemäß durch die kennzeichnenden Merkmale des Patentanspruchs 1 gelöst.

Die erfindungsgemäße Universal-Werkzeugmaschine bietet die Möglichkeit, dass die Werkstücke in horizontaler Tischstellung auf den Werkstücktisch aufgespannt werden, und dass sie in vertikaler Stellung des Werkstücktischs bearbeitet werden. Bei einer derartigen Bearbeitung können die Bearbeitungsspäne frei nach unten z. B. in einen dafür vorgesehenen Späneauffangraum im Maschinenbett fallen. Die auf die Teleskopabdeckung fallenden Späne können an diesen Abdeckungen abgleiten und gelangen somit zusammen mit evtl.

Kühlschmiermitteln zu dem Späneauffangraum im Maschinenständer. Von dort können sie dann über eine Förderschnecke oder eine andere geeignete Fördereinrichtung zu einem gesonderten Spänecontainer oder dgl. transportiert werden. Dadurch kann die Späneentsorgung erheblich vereinfacht werden. Ein weiterer wesentlicher Vorteil dieses Maschinenkonzeptes besteht in der steifen Maschinenkonstruktion, die eine hochgenaue Bearbeitung auch größerer und schwerer Werkstücke ermöglicht. Dies wird dadurch erreicht, dass der Werkstücktisch sowohl in der Horizontal- als auch der Vertikalstellung auf dem stabilen und eigensteifen Maschinenbett abgestützt ist.

Ein besonders guter Zugang zum Arbeitsbereich der Werkzeugmaschine wird in einer vorteilhaften Ausführung dadurch erreicht, dass das Maschinenbett eine kreisbogenförmige Einbuchtung an der vorderen Längsseite aufweist. Die Werkzeugmaschine weist zweckmäßigerweise eine Schutzkabine auf, die im Bereich der Einbuchtung eine zur Seite verschiebbare Rundtüre hat. Dadurch wird die Zugänglichkeit zum Werkstücktisch erheblich erleichtert.

Weitere Besonderheiten und Vorzüge der Erfindung ergeben sich aus der folgenden Beschreibung eines Ausführungsbeispiels anhand der Zeichnung. Es zeigen:
- Fig. 1:: den Grundaufbau einer erfindungsgemäßen Universal-Werkzeugmaschine in schematischer Perspektivansicht und
- Fig. 2:: die in Fig. 1 dargestellte Universal-Werkzeugmaschine mit einer Schutzkabine in Perspektivansicht.

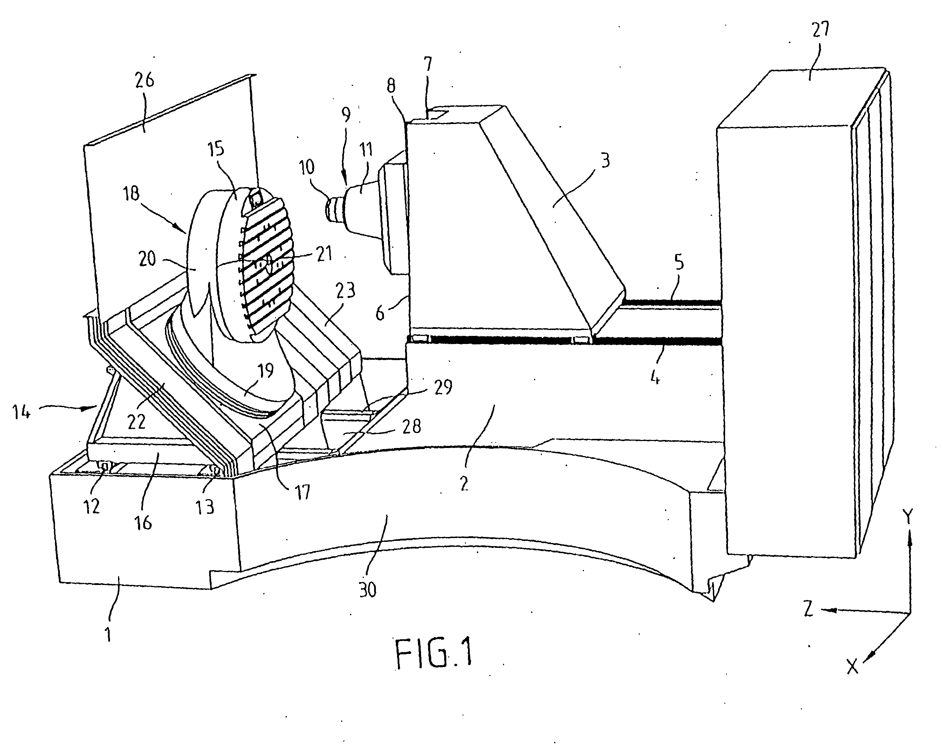

Die.in Fig. 1 schematisch dargestellte Universal-Fräs- und Bohrmaschine enthält ein z.B. als Gußteil oder Schweißkonstruktion ausgeführtes formsteifes Maschinenbett 1 mit einem erhöhten Bettkörper 2, auf dem ein als Fahrständer ausgebildeter vertikaler Maschinenständer 3 über zwei auf der Oberseite des Bettkörpers 2 angeordnete parallele Führungsschienen 4 und 5 durch einen nicht dargestellten Antrieb in einer ersten Horizontalachse (Z-Achse) motorisch verfahrbar ist.

An einer in Fig. 1 linken vertikalen Seitenwand 6 des z.B. als Gußkonstruktion oder verrippte Schweißkonstruktion ausgeführten formsteifen Maschinenständers 3 sind zwei vertikal verlaufende parallele Führungsschienen 7 und 8 montiert, an denen ein Werkzeugschlitten 9 mit einer horizontalen Bearbeitungsspindel 10 durch einen nicht dargestellten Antrieb im einer Vertikalachse (Y-Achse) verfahrbar angeordnet ist. Die Bearbeitungsspindel 10 ist in einem Traggehäuse 11 des Werkzeugschlittens 9 drehbar gelagert und wird durch einen nicht gezeigten drehzahlgesteuerten Motor angetrieben. Bei der in Fig. 1 gezeigten Ausführung ist die Bearbeitungsspindel 9 als Motorspindel ausgeführt.

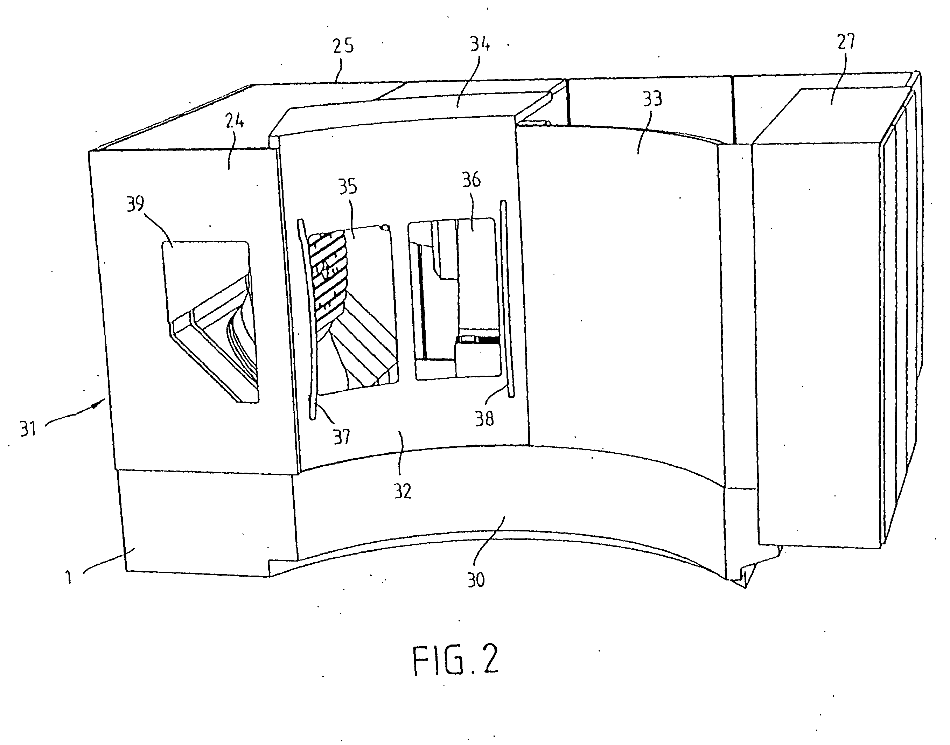

An der in Fig. 1 linken Seite des Maschinenbetts 1 sind auf diesem von dem Bettkörper 2 beabstandet zwei unter einem Winkel von 90° zu den Führungsschienen 4 und 5 verlaufende horizontale Führungsschienen 12 und 13 angeordnet, auf denen ein Werkstückschlitten 14 mit einem zwischen einer Horizontal- und Vertikalstellung verschenkbaren Werkstücktisch 15 durch einen nicht dargestellten Antrieb in einer zur ersten Horizontalachse rechtwinkligen zweiten Horizontalachse (X-Achse) verfahrbar ist. Der Werkstückschlitten 14 enthält ein auf den Führungsschienen 12 und 13 verschiebbar geführtes Stützteil 16 in Form eines Dreikantprismas, das eine zur vertikalen Seitenwand 6 des Maschinenständers 3 unter 45° geneigte Auflagefläche 17 aufweist. Auf der Auflagefläche 17 ist eine Konsole 18 mittels eines - nicht dargestellten - Antriebs um eine zur Auflagefläche 17 senkrechte Mittelachse verdrehbar angeordnet. Die Konsole 18 hat bei der in den Fig. 1 und 2 dargestellten Ausführung einen auf der Auflagefläche 17 angeordneten Fuß 19 und einem mit diesem einstükkig ausgebildeten Tragansatz 20, der eine unter 45° zur Konsolendrehachse angeordnete Tragfläche 21 aufweist. Auf der Tragfläche 21 ist der Werkstücktisch 15 montiert, der bei der gezeigten Ausführung ein um eine zur Tragfläche senkrechte Mittelachse motorisch verdrehbarer Rundtisch ist. Durch eine entsprechende Drehung der Konsole 18 um deren Drehachse ist der Werkstücktisch 15 somit zwischen einer in Fig. 1 dargestellten Vertikalstellung und einer nicht gezeigten Horizontalstellung verdrehbar. Die Mittelachse des Werkstücktischs 15 schneidet die Dreh- und Mittelachse der Konsole 18 stets in einem Punkt und zwar unabhängig von der Drehstellung der Konsole 18 bzw. des Werkstücktischs 15. Zur Drehung der Konsole 18 und des Werkstücktischs 15 sowie zur Linearbewegung des Ständers 3 und des Werkzeug- und Werkstückschlittens 9 bzw. 14 können herkömmliche Antriebsaggregate, wie z.B. Elektromotoren oder Hydraulikmotoren mit oder ohne Getriebe, eingesetzt werden.

An den Seiten der Auflagefläche 17 ist am Werkstückschlitten 14 das eine Ende jeweils einer Teleskopabdeckung 22, 23 aus gegeneinander verschiebbaren Abdeckblechen angeordnet, deren andere Enden an den in Fig. 2 gezeigten vorderen und hinteren Seitenwänden 24 und 25 einer Schutzkabine 31 befestigt sind. Dadurch ist der hintere Bereich des Werkstückschlittens 14 und besonders dessen Führung mit den Führungsschienen 12 bzw. 13 gegen Verschmutzung durch Bearbeitungsspäne oder dgl. geschützt. Am oberen Ende der Auflagefläche 17 ist ein zusätzliches seitliches Abdeckblech 26 angeordnet. An dem in Fig. 1 rechten Ende des Maschinenbetts 1 ist ein Steuerschrank 27 zur Aufnahme der Steuer- und Versorgungsaggregate befestigt.

Um einen schnellen Abtransport von Spänen zu ermöglichen ist in dem Maschinenbett 1 zwischen dem Bettkörper 2 und dem Werkstückschlitten 14 ein Späneauffangraum 28 vorgesehen, der durch Versteifungsrippen 29 abgeteilt ist. Von dort können die Späne dann über eine nicht gezeigte Förderschnecke oder eine andere geeignete Fördereinrichtung zu einem separaten Spänecontainer oder dgl. transportiert werden.

Das Maschinenbett 1 weist an der vorderen Längsseite eine kreisbogenförmige Einbuchtung 30 auf, durch die der Zugang zum Arbeitsbereich erleichtert wird.

Wie aus Fig. 2 hervorgeht, weist die auf dem Maschinenbett 1 befestigte Schutzkabine 31 im Bereich der Einbuchtung 30 eine zur Seite verschwenkbare Rundtüre 32 auf, die sich in der geschlossenen Stellung im wesentlichen über die in Fig. 2 linke Hälfte der Einbuchtung 30 erstreckt. Die in Fig. 2 rechte Hälfte wird durch ein gebogenes festes Wandteil 33 abgedeckt. Die Rundtüre 32 hat an ihrer Oberseite eine nach innen rechtwinklig abgewinkelte Deckplatte und ist durch entsprechende Führungen an der Oberseite der Schutzkabine und/oder auf dem Maschinenbett verschiebbar geführt. In der vollständig geöffneten Stellung ist die Rundtüre 32 über dem Wandteil 33 angeordnet und ermöglicht so einen guten Zugang zum Arbeitsbereich der Werkzeugmaschine. Bei der gezeigten Ausführung sind zwei Sichtfenster 35 und 36 und jeweils einen Handgriff 37 bzw. 38 an den beiden Seiten der Rundtüre 32 vorgesehen. Zum besseren Einblick in den Arbeitsbereich ist auch in der vorderen Seitenwand 24 ein zusätzliches Sichtfenster 39 angeordnet. Durch die Einbuchtung und die seitliche verschwenkbare Türe wird ein besonders guter Zugang zum Arbeitsbereich der Maschine ermöglicht, wodurch die Einspannung der Werkstücke oder deren Überprüfung erheblich vereinfacht wird.

Die erfindungsgemäße Werkzeugmaschine weist neben den vorstehend beschriebenen Komponenten auch an sich bekannte und daher nicht dargestellte Werkzeugspeicher und eine entsprechende Werkzeugwechseleinrichtung z.B. in Form einer Greiferanordnung mit einem oder mehreren Werkzeuggreifern auf. Dadurch können Werkstücke vollständig ohne manuelle Eingriffe bearbeitet werden. Durch eine gesteuerte Linearbewegung des Maschinenständers 3, des Werkzeugschlittens 9 und des Werkstückschlittens 14 sowie durch eine Drehbewegung der Konsole 18 und des Werkstücktischs 15 ist eine
5-Achsen-Bearbeitung auch komplizierter geformter Werkstücke in einer Aufspannung durchführbar.

Die Erfindung ist nicht auf das im einzelnen beschriebene und in der Zeichnung dargestellte Ausführungsbeispiel beschränkt. So kann der Werkstücktisch z.B. auch mit einem entsprechenden Antrieb versehen sein, durch den der Werkstücktisch mit einer entsprechenden Drehzahl angetrieben wird. Mit Hilfe von in die Bearbeitungsspindel eingesetzten Drehwerkzeugen können bei entsprechendem Antrieb des Drehtisches 22 auch unterschiedliche Drehbearbeitungen ausgeführt werden.

## Patentansprüche

1. Universal-Werkzeugmaschine mit
- einem auf einem Maschinenbett in der horizontalen Z-Koordinatenachse verfahrbaren Maschinenständer (3),
- einem am Maschinenständer (3) in der vertikalen Y-Koordinatenachse motorisch verfahrbaren Werkstückschlitten (9) mit drehangetriebener horizontaler Arbeitsspindel (10),
- einem auf dem Maschinenbett in der horizontalen X-Koordinatenachse verfahrbaren Werkstückschlitten (14) mit einem zwischen einer horizontalen und einer vertikalen Stellung verschwenkbaren Werkstücktisch (15),
- wobei der Werkstückschlitten (14) ein auf Führungen (12, 13) verfahrbares Stützteil (16) mit einer zur vertikalen Stirnwand (6) des Maschinenständers (3) unter 45° schräg nach unten verlaufenden Auflagefläche (17) aufweist, an der eine den Werkstücktisch (15) tragende Konsole (18) um eine zur Auflagefläche (17) senkrechte Mittelachse motorisch verdrehbar angeordnet ist,
**dadurch gekennzeichnet, daß**
- die Konsole (18) einen auf der Auflagefläche (17) angeordneten Fuß (19) und einen mit diesem einstückigen Tragansatz (20) enthält, der eine unter einem 45°-Winkel zur Konsolendrehachse verlaufende Tragfläche (21) für den Werkstücktisch (15) aufweist,
- das einteilige Stützteil (16) die Form eines Dreikantprismas hat und
- an den Seiten des Werkstückschlittens (14) schräg nach unten zu einem Späneauffangraum (28) in dem Maschinenständer (1) verlaufende Teleskopabdeckungen (22, 23) angeordnet sind.

2. Universal-Werkzeugmaschine nach Anspruch 1,
**dadurch gekennzeichnet, daß**
der Späneauffangraum (28) zwischen einem die Führungen (4, 5) für den Fahrständer (3) tragendem Bettkörper und dem Werkstückschlitten (14) angeordnet ist.

3. Universal-Werkzeugmaschine nach Anspruch 1 oder 2,
**dadurch gekennzeichnet, daß**
das Maschinenbett (1) an einer Längsseite eine kreisbogenförmige Einbuchtung (30) aufweist und eine am Maschinenbett (1) vorgesehene Schutzkabine (31) im Bereich der Einbuchtung (30) eine seitlich verschiebbare Rundtüre (32) aufweist.

## Claims

1. A universal machine tool with:
- a machine post (3) movable on a machine bed in the horizontal Z-co-ordinate axis,
- a workpiece carrier (9) motor-drivable on the machine post (3) along the vertical Y-co-ordinate axis with a rotationally driven horizontal work spindle (10),
- a workpiece carrier (14) movable on the machine bed in the horizontal X-co-ordinate axis, with a workpiece table (15) pivotable between a horizontal and a vertical position,
- the workpiece carrier (14) having a support part (16) movable on guides (12, 13) and with a support surface (17) extending downwardly at an angle of 45° to the vertical end wall (6) of the machine post (3), on which support surface (17) there is disposed a console (18) so as to be motor-drivable about a centre-line perpendicular to the support surface (17), said console (18) carrying the workpiece table (15),
**characterised in that**
- the console (18) contains a foot (19) disposed on the support surface (17) and a carrier attachment (20) in one piece with said foot (19), said carrier attachment having a carrier surface (21) for the workpiece table (15), said carrier surface (21) extending at an angle of 45° to the axis of rotation of the console,
- the one-piece support part (16) has the shape of a triangular prism and
- telescopic covers (22, 23) extending downwards at an angle to a chip collecting chamber (28) in the machine post (1) are disposed at the sides of the workpiece carrier (14).

2. A universal machine tool according to claim 1, **characterised in that** the chip collecting chamber (28) is disposed between the workpiece carrier (14) and a bed body carrying the guides (4, 5) for the machine post (3).

3. A universal machine tool according to claim 1 or 2, **characterised in that** the machine bed (1) has on one longitudinal side an indentation (30) in the form of an arc of a circle and a protective cabin (31) provided on the machine bed (1) has a laterally slidable round door (32) in the region of the indentation (30).

## Revendications

1. Machine-outil universelle avec un bâti de machine (3) mobile sur une base de machine dans l'axe horizontal Z de coordonnées, un coulisseau pour pièces (9) mobile de manière motorisée sur le bâti de la machine (3) dans l'axe vertical Y de coordonnées avec un arbre moteur (10) horizontal à entraînement rotatif, un coulisseau pour pièces (14) déplaçable à la base de la machine dans l'axe horizontal X de coordonnées avec une table porte-pièces (15) pivotante entre une position horizontale et verticale, sachant que le coulisseau pour pièces (14) comporte un élément de soutien (16) mobile sur des glissières de guidage (12, 13) avec une surface d'appui (17) passant à 45° en biais vers le bas par rapport à la paroi frontale verticale (6) du bâti de la machine (3), surface d'appui sur laquelle une console (18) portant la table porte-pièces (15) est disposée de manière rotative par motorisation autour d'un axe central perpendiculaire à la surface d'appui (17),
**caractérisée en ce que**
la console (18) comprend un pied (19) disposé sur la surface d'appui (17) et un épaulement porteur (20) en une pièce avec ce pied, épaulement qui comporte une surface porteuse (21) pour la table porte-pièces (15), surface effectuant un angle de 45° par rapport à l'axe de rotation de la console, l'élément de soutien (16) en une section a la forme d'un prisme triangulaire et des couvercles télescopiques (22, 23) traversant en biais vers le bas en direction d'un espace collecteur de copeaux dans le support de la machine (1) sont disposés sur les côtés du coulisseau pour pièces (14).

2. Machine-outil universelle selon la revendication 1,
**caractérisée en ce**
**que** l'espace collecteur de copeaux (28) est disposé entre un corps de base portant les glissières de guidage (4, 5) pour le bâti roulant (3) et le coulisseau pour pièces (14).

3. Machine-outil selon la revendication 1 ou 2,
**caractérisée en ce que**
la base de la machine (1) comporte sur le grand côté un creux (30) en forme d'arc de cercle et **en ce qu'**une cabine de protection (31) prévue à la base de la machine (1) comprend dans la zone du creux (30) une porte tournante (32) pouvant être déplacée latéralement.
